# EUROPEAN PATENT APPLICATION

(11) **EP 1 600 881 A1**
(43) Date of publication of application: **30.11.2005**
(21) Application number: 04253216.8
(22) Date of filing: 28.05.2004
(51) Int. Cl.: G06K 9/22, G06F 3/033

(54) **Handwriting recognition system**

(71) Applicant: Zamna Limited, Orpington, Kent BR5 1QJ (GB)
(72) Inventor: Parker, Neil, Orpington, Kent BR5 1QJ (GB)
(74) Representative: Rees, Alexander Ellison

(57) **Abstract**

A handwriting recognition system (10) for providing highly accurate handwriting translation while reducing the required processing and memory. The handwriting recognition system (10) includes a microprocessor unit (11) having a database of system characters stored therein, a display screen member (12) and a data input screen member (15) connected to the display screen member and to the database, said data input screen member including a touch-sensitive character entry zone (17) being divided into a plurality of size-adjustable character entry segments (18) and having a plurality of software templates (21) each being disposed in a respective character entry segment. A writing instrument (31) for making character entries onto the touch-sensitive character entry zone of the microprocessor unit (11) is provided.

## Description

### BACKGROUND OF THE INVENTION

### Field of the Invention

The present invention relates to a handwriting recognition unit and more particularly pertains to a new handwriting recognition system for providing highly accurate handwriting translation while reducing the required processing and memory.

### Description of the Prior Art

The use of a handwriting recognition unit is known in the prior art. More specifically, a handwriting recognition unit heretofore devised and utilized are known to consist basically of familiar, expected and obvious structural configurations, notwithstanding the myriad of designs encompassed by the crowded prior art which have been developed for the fulfillment of countless objectives and requirements.

Known prior art includes U.S. Patent No. 5,239,592; U.S. Patent No. 5,307,424; U.S. Patent No. 5,799,107; U.S. Patent No. 5,517,579; U.S. Patent No. 5,157,737; and U.S. Patent No. Des. 307,134.

While these devices fulfill their respective, particular objectives and requirements, the aforementioned patents do not disclose a new handwriting recognition system. The inventive device includes a microprocessor unit having a database of system characters stored therein, a display screen member and a data input screen member connected to the display screen member and to the database, said data input screen member including a touch-sensitive character entry zone being divided into a plurality of size-adjustable character entry segments and having a plurality of software templates each being disposed in a respective the character entry segment; and a writing instrument for making character entries onto the touch-sensitive character entry zone of the microprocessor unit.

In these respects, the handwriting recognition system according to the present invention substantially departs from the conventional concepts and designs of the prior art, and in so doing provides an apparatus primarily developed for the purpose of providing highly accurate handwriting translation while reducing the required processing and memory.

### SUMMARY OF THE INVENTION

In view of the foregoing disadvantages inherent in the known types of handwriting recognition unit now present in the prior art, the present invention provides a new handwriting recognition system construction wherein the same can be utilized for providing highly accurate handwriting translation while reducing the required processing and memory.

The general purpose of the present invention, which will be described subsequently in greater detail, is to provide a new handwriting recognition system which has many of the advantages of the handwriting recognition unit mentioned heretofore and many novel features that result in a new handwriting recognition system which is not anticipated, rendered obvious, suggested, or even implied by any of the prior art handwriting recognition unit, either alone or in any combination thereof.

To attain this, the present invention generally comprises a microprocessor unit having a database of system characters stored therein, a display screen member and a data input screen member connected to the display screen member and to the database, said data input screen member including a touch-sensitive character entry zone being divided into a plurality of size-adjustable character entry segments and having a plurality of software templates each being disposed in a respective the character entry segment; and a writing instrument for making character entries onto the touch-sensitive character entry zone of the microprocessor unit.

There has thus been outlined, rather broadly, the more important features of the invention in order that the detailed description thereof that follows may be better understood, and in order that the present contribution to the art may be better appreciated. There are additional features of the invention that will be described hereinafter and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the spirit and scope of the present invention.

It is therefore an object of the present invention to provide a new handwriting recognition system which has many of the advantages of the handwriting recognition unit mentioned heretofore and many novel features that result in a new handwriting recognition system which is not anticipated, rendered obvious, suggested, or even implied by any of the prior art handwriting recognition unit, either alone or in any combination thereof.

It is another object of the present invention to provide a new handwriting recognition system which may be easily and efficiently manufactured and marketed.

It is a further object of the present invention to provide a new handwriting recognition system which is of a durable and reliable construction.

An even further object of the present invention is to provide a new handwriting recognition system which is susceptible of a low cost of manufacture with regard to both materials and labor, and which accordingly is then susceptible of low prices of sale to the consuming public, thereby making such handwriting recognition system economically available to the buying public.

Still yet another object of the present invention is to provide a new handwriting recognition system which provides in the apparatuses and methods of the prior art some of the advantages thereof, while simultaneously overcoming some of the disadvantages normally associated therewith.

Still another object of the present invention is to provide a new handwriting recognition system for providing highly accurate handwriting translation while reducing the required processing and memory.

Yet another object of the present invention is to provide a new handwriting recognition system which includes a microprocessor unit having a database of system characters stored therein, a display screen member and a data in put screen member connected to the display screen member and to the database, said data input screen member including a touch-sensitive character entry zone being divided into a plurality of size-adjustable character entry segments and having a plurality of software templates each being disposed in a respective the character entry segment; and a writing instrument for making character entries onto the touch-sensitive character entry zone of the microprocessor unit.

Still yet another object of the present invention is to provide a new handwriting recognition system that uses a software template approach.

Even still another object of the present invention is to provide a new handwriting recognition system that efficiently and effectively identifies one's handwriting.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be made to the accompanying drawings and descriptive matter in which there are illustrated preferred embodiments of the invention.

### BRIEF DESCRIPTION OF THE DRAWINGS

The invention will be better understood and objects other than those set forth above will become apparent when consideration is given to the following detailed description thereof. Such description makes reference to the annexed drawings wherein:
Figure 1 is a perspective view of a new handwriting recognition system according to the present invention.
Figure 2 is a front elevational view of the present invention.
Figure 3 is a detailed front elvational view of the data entry screen member of the present invention.
Figure 4 is a schematic diagram of the present invention.
Figure 5 is a elevational view of the one of the software templates of the present invention.
Figure 6 is a side elevational view of a valid and invalid character entry upon the software templates of the present invention.
Figure 7 is chart of the numbering sequence for valid entry of a character of the present invention.

### DESCRIPTION OF THE PREFERRED EMBODIMENT

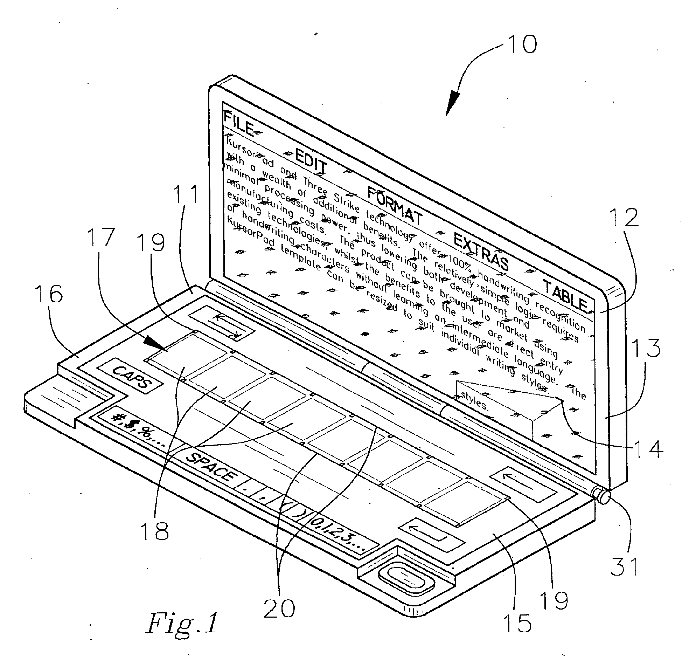

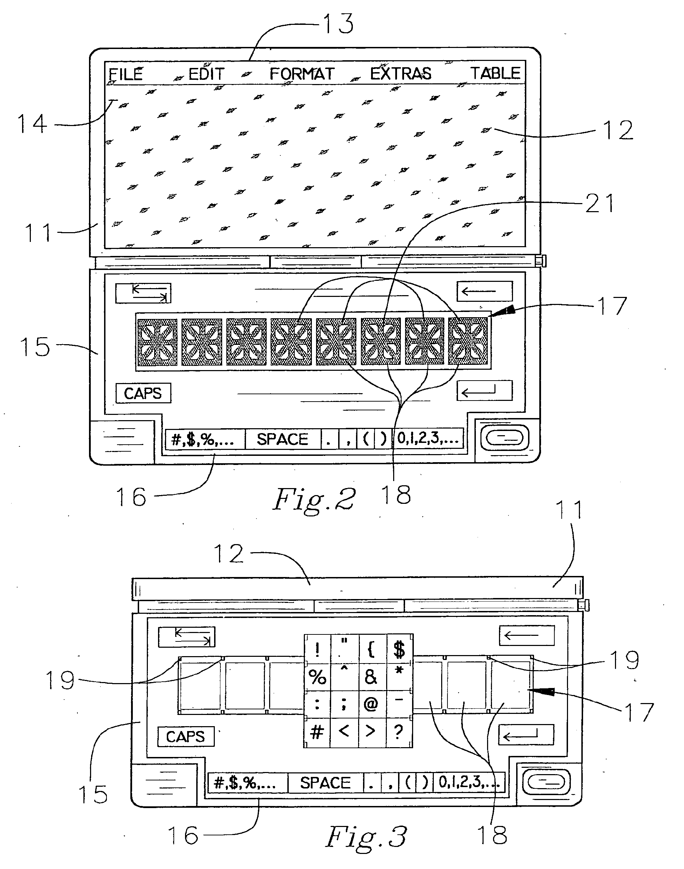

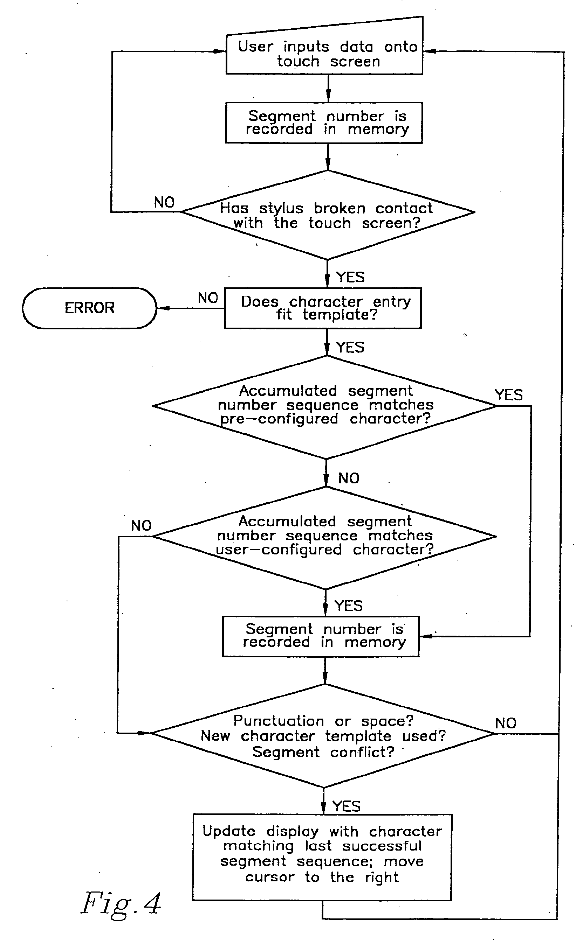

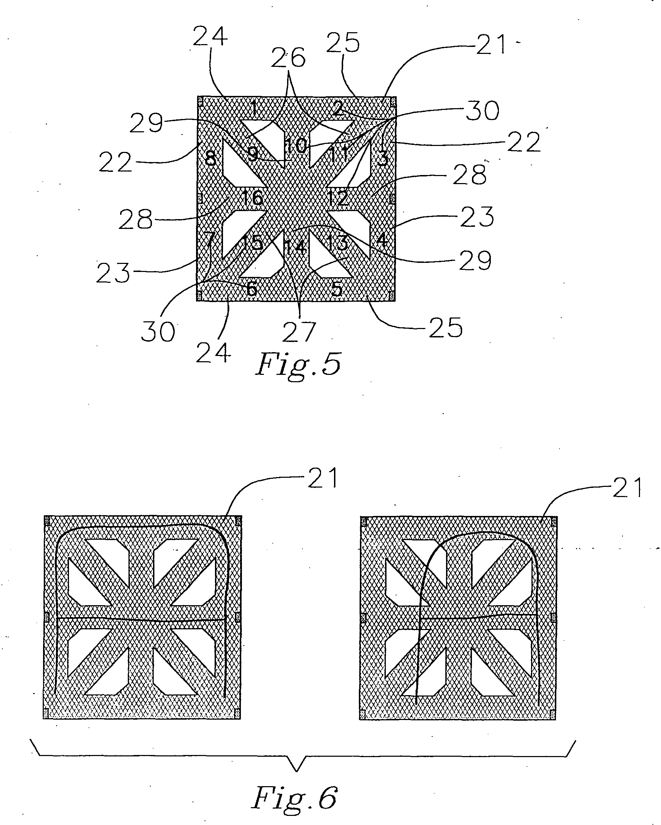

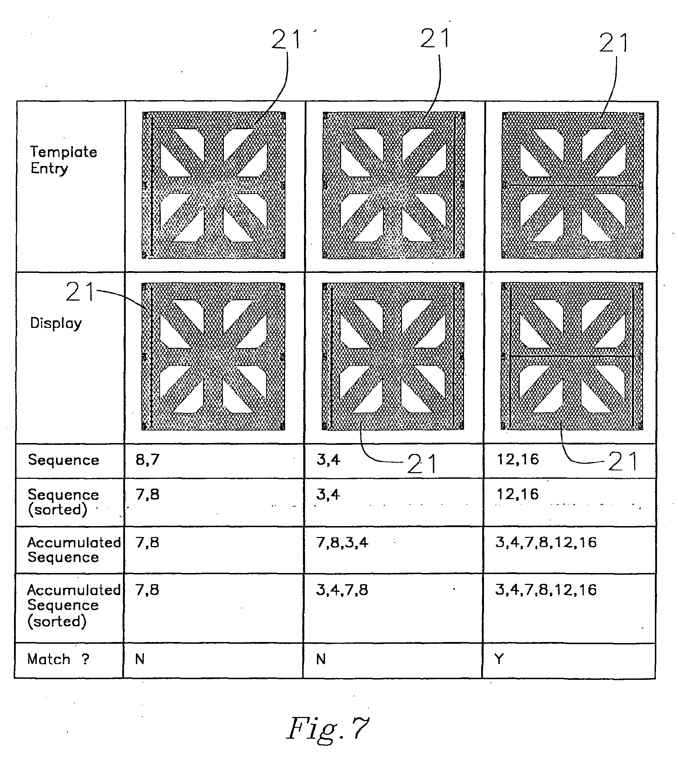

With reference now to the drawings, and in particular to Figures 1 through 7 thereof, a new handwriting recognition system embodying the principles and concepts of the present invention and generally designated by the reference numeral 10 will be described.

As best illustrated in Figures 1 through 7, the handwriting recognition system 10 generally comprises a microprocessor unit 11 having a database of system characters stored therein, a display screen member 12 and a data input screen member 15 conventionally connected to the display screen member 12 and to the database. The data input screen member 15 includes a touch-sensitive character entry zone 17 being divided into a plurality of size-adjustable character entry segments 18 and having a plurality of software templates 21 each being disposed in a respective character entry segment 18. The handwriting recognition system 10 also includes a writing instrument 31 for making character entries onto the touch-sensitive character entry zone 17 of the microprocessor unit 11. The display screen member 12 is essentially a touch sensitive display screen which includes a movable cursor 14 displayed upon the display screen. The data input screen member 15 includes segment size adjustment members 19 spaced along edges 20 of the character entry zone 17 and being manipulatable and movable with the writing instrument 31. The segment size adjustment members 19 are capable of being dragged across the character entry zone 17 to alter the size of the character entry segments 18 by the writing instrument 31. Each of the software templates 21 includes a plurality of link members 22-29 with each link member 22-29 representing a unique number 30. The link members 22-29 include upper side link members 22, lower side link members 23, left upper and lower link members 24, right upper and lower link members 25, upper diagonal link members 26, lower diagonal link members 27, horizontal link members 28, and vertical link members 29 with the link members 22-29 being continuously connected. The link members 22-29 are uniquely numbered from one to sixteen. A validly entered character upon one of the software templates 21 within a particular character entry segment 18 is entirely entered and disposed upon a plurality of the link members 22-29. Each validly entered character is identified by a series of numbers 30 and is compared with the system characters and can displayed upon the display screen member 12 upon a user touching the display screen member 12. Each software template 21 is essentially laden with conventional sensors and includes a software program which represents each sensor with a unique number 30. The display screen member 12 includes a first housing 13, and the data input screen member includes a second housing 16 which is hingedly and conventionally attached to the first housing 13.

In use, a use by using the writing instrument 31 enters a character upon one of the character entry segments 18 and upon one of the software templates 21 which is checked as to its validity. The character must be entered entirely upon any of the link members 22-29. If not, the character is deemed to be invalid and an error will be displayed upon the display screen member 12. If the character is valid, the numbers 30 representing the link members 22-29 upon which the character is entered are accumulated in sequence and recorded in the database of the microprocessor unit 11. After which, a check is made to see whether other characters have been entered in the character entry zone 17. If not, the characters that were entered are displayed upon the display screen member 12 with the cursor 14 being moved one space to the right. If so, then the process of checking the validity of the character is repeated.

As to a further discussion of the manner of usage and operation of the present invention, the same should be apparent from the above description. Accordingly, no further discussion relating to the manner of usage and operation will be provided.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A handwriting recognition system comprising:
a microprocessor unit having a database of system characters stored therein, a display screen member and a data input screen member connected to said display screen member and to said database, said data input screen member including a touch-sensitive character entry zone being divided into a plurality of size-adjustable character entry segments and having a plurality of software templates each being disposed in a respective said character entry segment; and
a writing instrument for making character entries onto said touch-sensitive character entry zone of said microprocessor unit.

2. A handwriting recognition system as described in claim 1, wherein said display screen member is essentially a touch sensitive display screen which includes a movable cursor displayed upon said display screen.

3. A handwriting recognition system as described in claim 2, wherein said data input screen member includes segment size adjustment members spaced along edges of said character entry zone and being manipulatable and movable with said writing instrument.

4. A handwriting recognition system as described in claim 3, wherein said segment size adjustment members are capable of being dragged across said character entry zone to alter the size of said, character entry segments.

5. A handwriting recognition system as described in claim 4, wherein each of said software templates includes a plurality of link members with each link member representing a unique number.

6. A handwriting recognition system as described in claim 5, wherein said link members includes upper side link members, lower side link members, left upper and lower link members, right upper and lower link members, upper diagonal link members, lower diagonal link members, horizontal link members, and vertical link members.

7. A handwriting recognition system as described in claim 6, wherein said link members are continuously connected.

8. A handwriting recognition system as described in claim 7, wherein said link members are uniquely numbered from one to sixteen.

9. A handwriting recognition system as described in claim 8, wherein a validly entered character upon one of said software templates within a particular said character entry segment is entirely entered and disposed upon a plurality of said link members.

10. A handwriting recognition system as described in claim 9, wherein each said validly entered character is identified by a series of said numbers and is compared with said system characters and is displayed upon said display screen member upon a user touching said display screen member.

11. A handwriting recognition system as described in claim 10, wherein each said software template is essentially laden with sensors.

12. A handwriting recognition system as described in claim 11, wherein said microprocessor unit includes a software program which represents each said sensor with a unique said number.

13. A handwriting recognition system as described in claim 12, wherein said display screen member includes a first housing, and said data input screen member includes a second housing which is hingedly attached to said first housing.

14. A handwriting recognition system comprising:
a microprocessor unit having a database of system characters stored therein, a display screen member and a data input screen member connected to said display screen member and to said database, said data input screen member including a touch-sensitive character entry zone being divided into a plurality of size-adjustable character entry segments and having a plurality of software templates each being disposed in a respective said character entry segment; and
a writing instrument for making character entries onto said touch-sensitive character entry zone of said microprocessor unit, said display screen member being essentially a touch sensitive display screen which includes a movable cursor displayed upon said display screen, said data input screen member including segment size adjustment members spaced along edges of said character entry zone and being manipulatable and movable with said writing instrument, said segment size adjustment members being capable of being dragged across said character entry zone to alter the size of said character entry segments by said writing instrument, each of said software templates including a plurality of link members with each link member representing a unique number, said link members including upper side link members, lower side link members, left upper and lower link members, right upper and lower link members, upper diagonal link members, lower diagonal link members, horizontal link members, and vertical link members, said link members being continuously connected, said link members being uniquely numbered from one to sixteen, a validly entered character upon one of said software templates within a particular said character entry segment being entirely entered and disposed upon a plurality of said link members, each said validly entered character being identified by a series of said numbers and being compared with said system characters and being displayed upon said display screen member upon a user touching said display screen member, each said software template is essentially laden with sensors, said microprocessor unit including a software program which represents each said sensor with a unique said number, said display screen member including a first housing, and said data input screen member including a second housing which is hingedly attached to said first housing.

15. A method of recognizing handwriting includes the steps of:
providing a microprocessor unit having a database of system characters and having a display screen member connected to a data input screen member and further having a character entry zone having a plurality of character entry segments each of which has a software template comprising a plurality of link members each being represented by a unique number;
providing a writing instrument for entering characters upon said character entry zone;
entering a character upon one of said character entry segments and upon one of said software templates using said writing instrument;
checking whether said character is valid, and if not valid displaying an error message upon said display screen member;
accumulating said numbers representing said link members upon which said character was entered;
recording said accumulated numbers in said microprocessor unit; and
checking for additional characters entered upon said character entry zone and if so, repeating steps beginning with said step of checking whether said character is valid, and if not, displaying said character upon said display screen member and moving to a right on the screen by using a cursor.

16. A method of recognizing handwriting as described in claim 15, wherein said step of checking whether said character is valid includes the step of checking whether said character is entirely entered and disposed upon a plurality of link members.
